# EUROPÄISCHE PATENTSCHRIFT

(11) **EP 2 070 738 B1**
(45) Veröffentlichungstag und Bekanntmachung des Hinweises auf die Patenterteilung: **22.02.2012**
(21) Anmeldenummer: 08169957.1
(22) Anmeldetag: 26.11.2008
(51) Int. Cl.: B60G 13/00, B60G 15/06, F16F 9/38

(54) **Kolben-Zylinderaggregat mit einem Kolbenstangenschutz**
Piston-cylinder generator with piston rod protection
Agrégat de cylindre à piston doté d'une protection des tiges de piston

(30) Priorität: 11.12.2007 DE 102007059800
(43) Veröffentlichungstag der Anmeldung: 17.06.2009
(73) Patentinhaber: ZF Friedrichshafen AG, 88038 Friedrichshafen (DE)
(72) Erfinder: Henneberg, Robert, 98693, Ilmenau (DE); Partosch, Frank, 97522, Sand/Main (DE); Strack, Simon, 96052, Bamberg (DE); Zietsch, Andreas, 97532, Üchtelhausen-Zell (DE)

(56) Entgegenhaltungen:
- DE-B3- 10 253 221
- DE-C2- 4 137 447
- DE-U1- 9 109 020
- US-A1- 2003 209 395

## Beschreibung

Die Erfindung betrifft ein Kolben-Zylinderaggregat mit einem Kolbenstangenschutz gemäß dem Oberbegriff von Patentanspruch 1.

Die Kolbenstange eines Kolben-Zylinderaggregates, z. B. Schwingungsdämpfer, sollte vor Schmutz geschützt werden, da sich Staub und/oder Feuchtigkeit auf die Lebensdauer des Kolben-Zylinderaggregats negativ auswirken. Deshalb wird sehr häufig ein Kolbenstangenschutz verwendet, der die Kolbenstange einhüllt. In der einfachsten Form besteht der Kolbenstangenschutz aus einem starren Rohr, dessen Innendurchmesser etwas größer dimensioniert ist als ein Zylinder des Schwingungsdämpfers. Es verbleibt dann aber ein ringförmiger Spalt zwischen dem Zylinder und der Innenseite des Kolbenstangenschutzes, so dass Schmutz eindringen kann.

Die DE 41 37 447 C2 beschreibt einen Teleskopstoßdämpfer, der an seinem kolbenstangenaustrittsseitigen Ende eine Kappe mit einem umlaufenden Kragen aufweist. Dieser Kragen greift nach der Montage in ein Faltenbalgende eines Kolbenstangeschutzes ein, wobei der Montageablauf automatisierbar sein soll. Auch die DE 41 39 131 A1 beschreibt einen Kolbenstangenschutz, der auf eine mit Anschlagflächen bestückte Zylinderrohrendkappe formschlüssig befestigbar ist.

Aus der gattungsbildenden DE 91 09 020 U1 ist ein Kolben-Zylinderaggregat, umfassend eine Kolbenstange, die in einem Zylinder axial beweglich geführt ist bekannt. Die Kolbenstange wird von einem Kolbenstangenschutz zumindest teilweise eingehüllt, der zumindest in Grenzen axial elastisch ausgeführt ist. Der Kolbenstangenschutz geht mit mindestens seiner Haltefläche und mit mindestens einer zylinderseitigen Anschlagfläche eine Formschlussverbindung ein, wobei das Kolben-Zylinderaggregat mindestens eine Montagefläche aufweist. Die Anschlagfläche wird von einem radialen Absatz gebildet, der an der der Anschlagfläche abgewandten Seite der Montagefläche ausgeführt ist.

Ein Problem besteht darin, dass die Montage nur schwer vollständig automatisierbar ist. Wenn der Kolbenstangenschutz bei einer Einfederungsbewegung an den Halteflächen zur Anlage kommt, ist häufig noch eine manuelle Unterstützung notwendig, um tatsächlich ein Aufschnappen des Kolbenstangenschutzes auf die Anschlagflächen zu erreichen. Diese manuellen Eingriffe führen zu Fehlern oder zu einem Mehraufwand.

Aufgabe der vorliegenden Erfindung ist es, ein Kolben-Zylinderaggregat derart weiterzuentwickeln, dass das aus dem Stand der Technik bekannte Montageproblem behoben ist.

Erfindungsgemäß wird die Aufgabe durch die Merkmale des Patentanspruchs 1 gelöst.

Bei der Montagebewegung führt der Kolbenstangenschutz ausgehend von der eingeknickten Stellung eine Taumelbewegung aus, die die Haltefläche über die mindestens eine zylinderseitige Anschlagfläche bewegt. Die Taumelbewegung wird von der Montageschräge unterstützt. Über den Abstand zwischen der Montageschräge und der Montagehilfsschräge kann das Einknickverhalten des Kolbenstangenschutzes bestimmt werden. Die Montagehilfsfläche verläuft ebenfalls schräg zur Längsachse der Kolbenstange und ermöglicht so ein Abgleiten der in Richtung des Zylinders weisenden Stirnfläche.

Die Montageschräge und die Montagehilfsfläche sind an einer zylinderseitigen Kappe ausgeführt, die auf das kolbenstangenaustrittseitige Ende gepresst ist.

Um eine möglichst umfassende Halterung, aber auch Abdichtung am Kolbenstangenschutz zu erreichen, ist die Montagehilfsfläche ebenfalls an einem Absatz ausgeführt, der eine Anschlagfläche aufweist.

Eine Alternativvariante wird durch die Merkmale des Anspruchs 4 beschrieben.

Der Vorsprung kann ganz einfach dadurch realisiert werden, indem der Kolbenstangenschutz zur Längsachse des Zylinders eine schrägverlaufende Stirnfläche aufweist, die auf der Montagehilfsfläche zur Anlage kommt.

Anhand der folgenden Figurenbeschreibung soll die Erfindung näher erläutert werden.

Es zeigt:
- Fig. 1: Kolben-Zylinderaggregat mit Kolbenstangenschutz in Montageaus- gangsstellung
- Fig. 2 u. 3: Kappe als Einzelteil

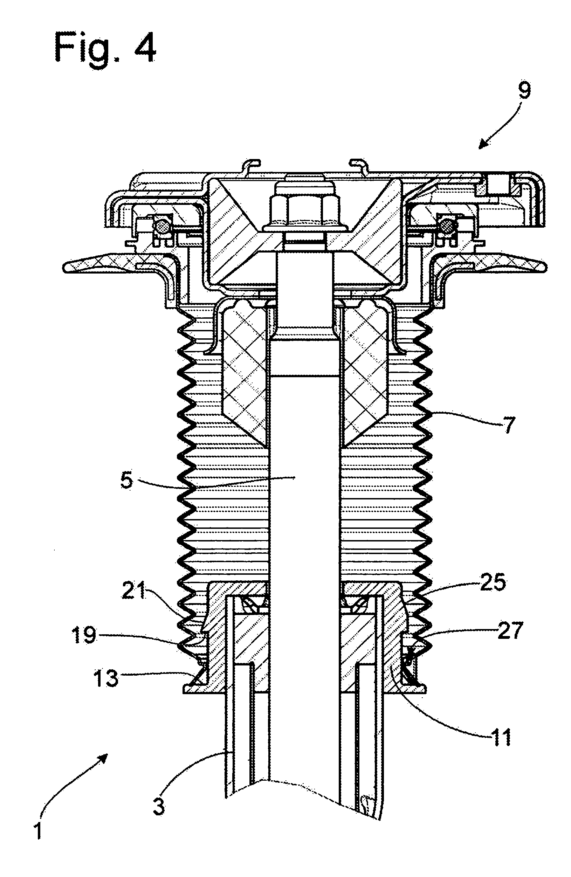

- Fig. 4: Kolben-Zylinderaggregat nach Fig. 1 in Montageendstellung
- Fig. 5: Alternativvariante zur Fig. 1

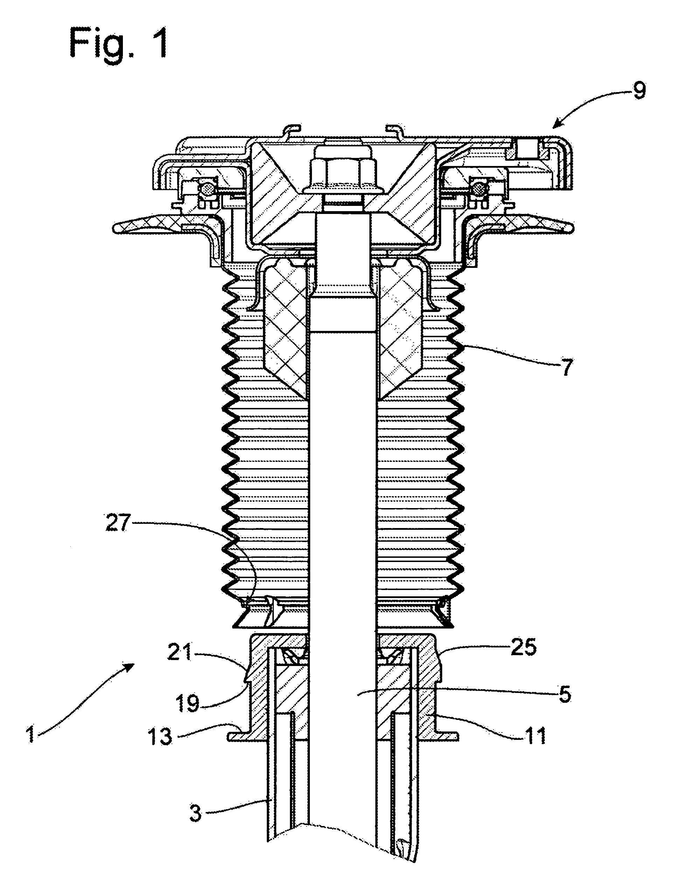

Die Fig. 1 zeigt einen Ausschnitt von einem Kolben-Zylinderaggregat 1, das einen Zylinder 3 umfasst, in dem eine Kolbenstange 5 axial beweglich geführt ist. An der Kolbenstange 5 ist mittelbar über ein Anschlusslager 9 ein Kolbenstangenschutz 7 fixiert. Der Kolbenstangenschutz 7 ist zumindest auf einem Längenabschnitt elastisch ausgeführt.

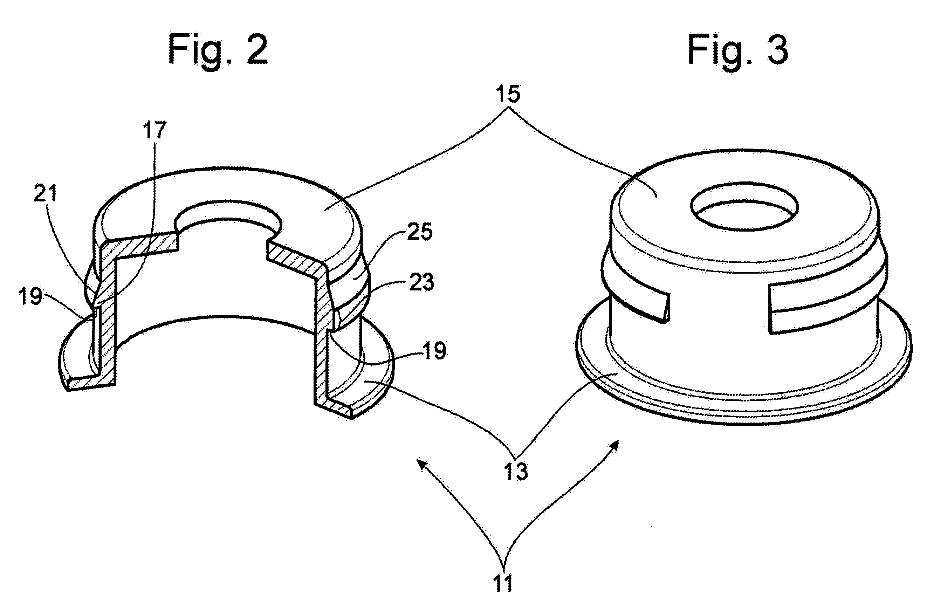

Am kolbenstangenaustrittsseitigen Ende des Zylinders 3 ist eine Kappe 11 fixiert. Die Kappe 11 verfügt, wie die Figuren 2 und 3 zeigen, über einen umlaufenden Steg 13. In Richtung einer Deckfläche 15 zum Steg 13 beabstandet ist auf einem Umfangsbereich ein radialer Absatz 17 ausgeführt. Der Absatz weist an seiner Unterseite zum umlaufenden Steg eine Anschlagfläche 19 auf. Auf der der Anschlagfläche 19 abgewandten Seite des Absatzes liegt eine Montageschräge 21 vor. An dem radialen Absatz 17 ist in einem axialen Abstand 23 zur Montageschräge 21 in Richtung der Deckfläche 15 zusätzlich eine Montagehilfsfläche 25 ausgeführt, die auf ihrer Unterseite in Richtung des Stegs 13 ebenfalls eine Anschlagfläche 19 aufweist.

Bei der Montage wird der Kolbenstangenschutz 7 durch Einfahren der Kolbenstange 5 in den Zylinder 3 mit seinem unteren Ende in Richtung der Kappe 11 bewegt. Mindestes eine der Halteflächen 27 an der Innenwandung des Kolbenstangenschutzes 7 kommt auf der der Montageschräge 21 axial vorgelagerten Montagehilfsfläche 25 einseitig zur Anlage. Bei einer weiteren Einfahrbewegung der Kolbenstange knickt der Kolbenstangenschutz 7 auf einem Hubbereich etwas ein, so dass die Haltefläche 27 über die Montageschräge 21 gleitet und auf die Anschlagfläche 19 geknöpft wird. Bei weiterer axialer Stauchung des Kolbenstangenschutzes gleitet der Kolbenstangenschutz über die Montagehilfsfläche 25 hinaus in Richtung des umlaufenden Stegs 13, überwindet dabei den Abstand 23 und hintergreift den radialen Absatz 17, so dass die Haltefläche 27 auch an der der Montagehilfsfläche 25 abgewandten Anschlagfläche 19 zur Anlage kommt. Damit ist der Kolbenstangenschutz 7 umlaufend gegen eine Abzugbewegung von der Kappe 11 gesichert. In Einfahrrichtung der Kolbenstange stützt sich der Kolbenstangenschutz 7 am umlaufenden Steg 13 ab, so dass ein axialer Freigang der Haltefläche 27 zwischen Anschlagfläche 19 und dem umlaufenden Steg 13 besteht.

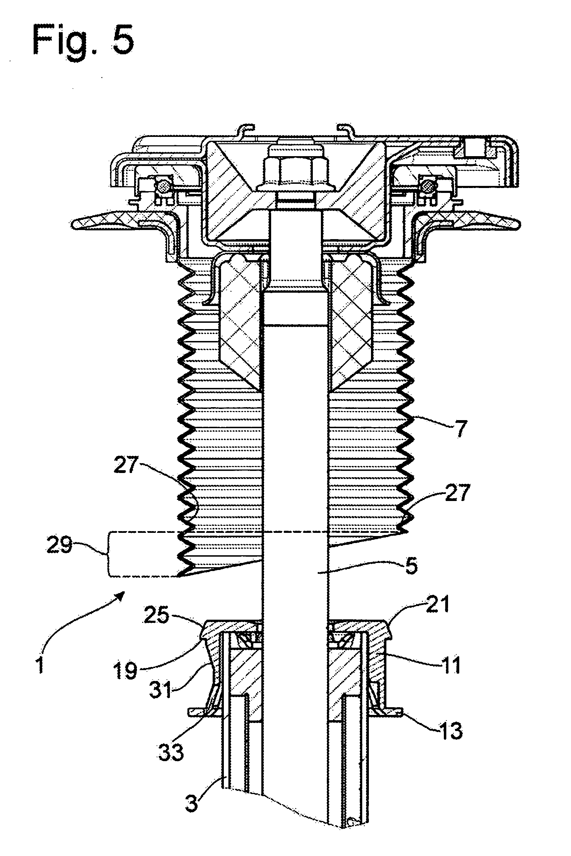

Die Variante nach Fig. 5 unterscheidet sich dadurch, dass der Kolbenstangenschutz 7 in Axialrichtung zum Zylinder 3 zu mindestens einer Haltefläche 27 einen Vorsprung 29 aufweist, der auf der Montagehilfsfläche 25 zur Anlage kommt. Der Vorsprung 29 wird dadurch erreicht, dass der Kolbenstangenschutz zur Längsachse des Zylinders eine schrägverlaufende Stirnfläche aufweist, die auf der Montagehilfsfläche 25 zur Anlage kommt. Geometrisch können die Montagehilfsfläche 25 und die Montageschräge 21 auch zusammenfallen, da zwischen diesen beiden Flächen kein axialer Versatz bestehen muss. Ggf. kann der Winkel der Montageschräge und der Montagehilfsfläche unterschiedlich ausgestaltet werden. In diesem Ausführungsbeispiel verfügt die Kappe auf einem Umfangsbereich zwischen der Anschlagfläche 19 und dem umlaufenden Steg 13 über eine Durchmesserreduzierung 31, die die Belüftung des Ringraums zwischen der Kolbenstange 7 und dem Kolbenstangenschutz über einen Durchbruch 33 in der Kappe 11 fördert.

## Patentansprüche

1. Kolben-Zylinderaggregat (1), umfassend eine Kolbenstange (5), die in einem Zylinder (3) axial beweglich geführt ist, wobei die Kolbenstange (5) von einem Kolbenstangenschutz (7) zumindest teilweise eingehüllt wird, der zumindest in Grenzen axial elastisch ausgeführt ist, wobei der Kolbenstangenschutz (7) mit mindestes einer Haltefläche (27) mit mindestens einer zylinderseitigen Anschlagfläche (19) eine Formschlussverbindung eingeht, wobei die Anschlagfläche (19) von einem radialen Absatz (17) gebildet wird und an der der Anschlagfläche (19) abgewandten Seite eine Montageschräge (21) ausgeführt ist,
**dadurch gekennzeichnet,**
**dass** das Kolben-Zylinderaggregat (1) eine Montagehilfsfläche (25) aufweist, die den Kolbenstangenschutz (7) bei dessen Montagebewegung auf einem Hubbereich der Kolbenstange (5) einknicken lässt, so dass die Haltefläche (27) über die zylinderseitige Anschlagfläche (19) geknöpft wird, wobei zwischen der Montageschräge (21) und der Montagehilfsfläche (25) ein axialer Abstand (23) vorliegt.

2. Kolben-Zylinderaggregat nach Anspruch 1,
**dadurch gekennzeichnet,**
**dass** die Montageschräge (21) und die Montagehilfsfläche (25) an einer zylinderseitigen Kappe (11) ausgeführt sind.

3. Kolben-Zylinderaggregat nach Anspruch 1,
**dadurch gekennzeichnet,**
**dass** die Montagehilfsfläche (25) ebenfalls an einem Absatz (17) ausgeführt ist, der eine Anschlagfläche (19) aufweist.

4. Kolben-Zylinderaggregat (1), umfassend eine Kolbenstange (5), die in einem Zylinder (3) axial beweglich geführt ist, wobei die Kolbenstange (5) von einem Kolbenstangenschutz (7) zumindest teilweise eingehüllt wird, der zumindest in Grenzen axial elastisch ausgeführt ist, wobei der Kolbenstangenschutz (7) mit mindestes einer Haltefläche (27) mit mindestens einer zylinderseitigen Anschlagfläche (19) eine Formschlussverbindung eingeht, wobei die Anschlagfläche (19) von einem radialen Absatz (17) gebildet wird und an der der Anschlagfläche (19) abgewandten Seite eine Montageschräge (21) ausgeführt ist,
**dadurch gekennzeichnet,**
**dass** das Kolben-Zylinderaggregat (1) eine Montagehilfsfläche (25) aufweist, die den Kolbenstangenschutz (7) bei dessen Montagebewegung auf einem Hubbereich der Kolbenstange (7) einknicken lässt, wobei der Kolbenstangenschutz (7) in Axialrichtung zum Zylinder (3) zu der mindestens einen Haltefläche (27) einen Vorsprung (29) aufweist, der auf der Montagehilfsfläche (25) zur Anlage kommt.

5. Kolben-Zylinderaggregat nach Anspruch 4,
**dadurch gekennzeichnet,**
**dass** der Kolbenstangenschutz (7) zur Längsachse des Zylinders (3) eine schrägverlaufende Stirnfläche aufweist, die auf der Montagehilfsfläche (25) zur Anlage kommt.

## Claims

1. Piston/cylinder assembly (1), comprising a piston rod (5) which is guided axially movably in a cylinder (3), the piston rod (5) being encased at least partially by piston rod protection (7) which is designed to be axially elastic at least within limits, the piston rod protection (7) making with at least one holding face (7) a positive connection with at least one cylinder-side stop face (19), the stop face (19) being formed by a radial step (17), and a mounting slope (21) being formed on the side facing away from the stop face (19), **characterized in that** the piston/cylinder assembly (1) has a mounting aid face (25) which causes the piston rod protection (7) to buckle during its mounting movement over a region of the stroke of the piston rod (5), with the result that the holding face (27) is buttoned over the cylinder-side stop face (19), an axial clearance (23) being present between the mounting slope (21) and the mounting aid face (25).

2. Piston/cylinder assembly according to Claim 1, **characterized in that** the mounting slope (21) and the mounting aid face (25) are formed on a cylinder-side cap (11).

3. Piston/cylinder assembly according to Claim 1, **characterized in that** the mounting aid face (25) is also formed on a step (17) which has a stop face (19).

4. Piston/cylinder assembly (1), comprising a piston rod (5) which is guided axially movably in a cylinder (3), the piston rod (5) being encased at least partially by piston rod protection (7) which is designed to be axially elastic at least within limits, the piston rod protection (7) making with at least one holding face (27) a positive connection with at least one cylinder-side stop face (19), the stop face (19) being formed by a radial step (17), and a mounting slope (21) being formed on the side facing away from the stop face (19), **characterized in that** the piston/cylinder assembly (1) has a mounting aid face (25) which causes the piston rod protection (7) to buckle during its mounting movement over a region of the stroke of the piston rod (5), the piston rod protection (7) having in the axial direction with respect to the cylinder (3), in relation to the at least one holding face (27), a projection (29) which comes to bear on the mounting aid face (25).

5. Piston/cylinder assembly according to Claim 4, **characterized in that** the piston rod protection (7) has with respect to the longitudinal axis of the cylinder (3) an obliquely running end face which comes to bear on the mounting aid face (25).

## Revendications

1. Ensemble cylindre-piston (1), comprenant une tige (5) de piston qui est guidée de manière mobile axialement dans un cylindre (3), la tige (5) de piston étant enveloppée au moins partiellement par une protection (7) de tige de piston qui est réalisée de manière élastique axialement au moins dans certaines limites, la protection (7) de tige de piston, par l'intermédiaire d'au moins une surface de retenue (27), entrant en liaison par coopération de forme avec au moins une surface de butée (19) du côté du cylindre, la surface de butée (19) étant formée par un épaulement radial (17), et un biseau de montage (21) étant réalisé du côté opposé à la surface de butée (19),
**caractérisé en ce que**
l'ensemble cylindre-piston (1) comprend une surface auxiliaire de montage (25) qui permet d'infléchir la protection (7) de tige de piston lors de son déplacement de montage sur une plage de course de la tige de piston (5), de telle sorte que la surface de retenue (27) soit emboîtée sur la surface de butée (19) du côté du cylindre, un écart axial (23) existant entre le biseau de montage (21) et la surface auxiliaire de montage (25).

2. Ensemble cylindre-piston selon la revendication 1,
**caractérisé en ce que**
le biseau de montage (21) et la surface auxiliaire de montage (25) sont réalisés sur un capuchon (11) du côté du cylindre.

3. Ensemble cylindre-piston selon la revendication 1,
**caractérisé en ce que**
la surface auxiliaire de montage (25) est également réalisée sur un épaulement (17) qui comprend une surface de butée (19).

4. Ensemble cylindre-piston (1), comprenant une tige (5) de piston qui est guidée de manière mobile axialement dans un cylindre (3), la tige (5) de piston étant enveloppée au moins partiellement par une protection (7) de tige de piston qui est réalisée de manière élastique axialement au moins dans certaines limites, la protection (7) de tige de piston, par l'intermédiaire d'au moins une surface de retenue (27), entrant en liaison par coopération de forme avec au moins une surface de butée (19) du côté du cylindre, la surface de butée (19) étant formée par un épaulement radial (17), et un biseau de montage (21) étant réalisé du côté opposé à la surface de butée (19),
**caractérisé en ce que**
l'ensemble cylindre-piston (1) comprend une surface auxiliaire de montage (25) qui permet d'infléchir la protection (7) de tige de piston lors de son déplacement de montage sur une zone de course de la tige de piston (5), la protection (7) de tige de piston comprenant une saillie (29) par rapport à l'au moins une surface de retenue (27) dans la direction axiale par rapport au cylindre (3), laquelle saillie vient prendre appui sur la surface auxiliaire de montage (25).

5. Ensemble cylindre-piston selon la revendication 4,
**caractérisé en ce que**
la protection (7) de tige de piston présente, par rapport à l'axe longitudinal du cylindre (3), une surface frontale s'étendant obliquement qui vient prendre appui sur la surface auxiliaire de montage (25).
